# EUROPÄISCHE PATENTANMELDUNG

(11) **EP 2 947 399 A1**
(43) Veröffentlichungstag der Anmeldung: **25.11.2015**
(21) Anmeldenummer: 15168115.2
(22) Anmeldetag: 19.05.2015
(51) Int. Cl.: F24J 2/46, F16L 51/04

(54) **LEITUNGSVERBINDUNG FÜR SOLARTHERMISCHE KRAFTWERKE**

(30) Priorität: 20.05.2014 DE 102014107068
(71) Anmelder: Witzenmann GmbH, 75175 Pforzheim (DE)
(72) Erfinder: Balmer, Bert, 75180 Pforzheim (DE)
(74) Vertreter: Lemcke, Brommer & Partner Patentanwälte Partnerschaft mbB

(57) **Zusammenfassung**

Vorgeschlagen wird eine Leitungsverbindung für solarthermische Kraftwerke (1), insbesondere Rinnenkraftwerke, zum Verbinden eines ersten Rohrleitungselements (6) mit einem zweiten Rohrleitungselement (7), welche Rohrleitungselemente (6, 7) sich im Wesentlichen gemeinsam in einer ersten Raumrichtung (x) erstrecken, welches erste Rohrleitungselement (6) in einer zweiten Raumrichtung (y), quer zu der ersten Raumrichtung (x), um ein festes Maß (H) von dem zweiten Rohrleitungselement (7) beabstandet ist, welches zweite Rohrleitungselement (7) in Richtung seiner Längserstreckung beim Betrieb des Kraftwerks (1) eine relativ starke thermisch bedingte Ausdehnung (A) aufweist, welche Leitungsverbindung sich dadurch auszeichnet, dass die Leitungsverbindung zumindest folgende Bestandteile umfasst: a) einen ersten flexiblen Schlauchabschnitt (4a); b) einen zweiten flexiblen Schlauchabschnitt (4c); und c) einen starren Rohrabschnitt (4e); welcher starre Rohrabschnitt (4e) zwischen dem ersten Schlauchabschnitt (4a) und dem zweiten Schlauchabschnitt (4c) angeordnet ist, während der erste Schlauchabschnitt (4a) einerseits mit dem starren Rohrabschnitt (4e) sowie andererseits mit dem ersten Rohrleitungselement (6) zu verbinden oder verbunden ist, und während der zweite Schlauchabschnitt (4c) einerseits mit dem starren Rohrabschnitt (4e) sowie andererseits mit dem zweiten Rohrleitungselement (7) zu verbinden oder verbunden ist.

## Beschreibung

Die Erfindung betrifft eine Leitungsverbindung nach dem Oberbegriff des Anspruchs 1 zum Verbinden eines ersten Rohrleitungselements mit einem zweiten Rohrleitungselement, welche Rohrleitungselemente sich im Wesentlichen gemeinsam in einer ersten Raumrichtung erstrecken, insbesondere horizontal, welches erste Rohrleitungselement in einer zweiten Raumrichtung, insbesondere vertikal, quer zu der ersten Raumrichtung, um ein festes Maß von dem zweiten Rohrleitungselement beabstandet ist, welches zweite Rohrleitungselement in Richtung seiner Längserstreckung beim Betrieb des Rinnenkraftwerks eine relativ starke thermisch bedingte Ausdehnung aufweist, insbesondere in einer Größenordnung im Meterbereich. Bei dem ersten Rohrleitungselement kann es sich insbesondere um eine Sammelleitung des Kraftwerks und bei dem zweiten Rohrleitungselement um das Absorber- oder Receiverrohr des Kraftwerks handeln.

Weiterhin betrifft die Erfindung eine Leitungsverbindungsanordnung nach dem Oberbegriff des Anspruchs 12 bei einem solarthermischen Kraftwerk, insbesondere Rinnenkraftwerk, die ein erstes Rohrleitungselement mit einem zweiten Rohrleitungselement verbindet, welche Rohrleitungselemente sich im Wesentlichen gemeinsam in einer ersten Raumrichtung erstrecken, welches erste Rohrleitungselement in einer zweiten Raumrichtung, quer zu der ersten Raumrichtung, um ein festes Maß von dem zweiten Rohrleitungselement beabstandet ist, welches zweite Rohrleitungselement in Richtung seiner Längserstreckung beim Betrieb des Rinnenkraftwerks eine relativ starke thermisch bedingte Ausdehnung erfährt.

Die Erfindung betrifft außerdem ein solarthermisches Kraftwerk nach dem Oberbegriff des Anspruchs 14, insbesondere ein solarthermisches Rinnenkraftwerk, mit einem ersten Rohrleitungselement und mit einem zweiten Rohrleitungselement zur Leiten eines durch Sonnenenergie erhitzten oder zu erhitzenden Fluids, weiche Rohrleitungselemente sich im Wesentlichen gemeinsam in einer ersten Raumrichtung erstrecken, welches erste Rohrleitungselement in einer zweiten Raumrichtung, quer zu der ersten Raumrichtung, um ein festes Maß von dem zweiten Rohrleitungselement beabstandet ist, welches zweite Rohrleitungselement in Richtung seiner Längserstreckung beim Betrieb des Rinnenkraftwerks aufgrund der hohen Temperatur des Fluids eine relativ starke thermisch bedingte Ausdehnung erfährt, sowie die Verwendung einer erfindungsgemäßen Leitungsverbindung zum Ausgleichen von variablen Abständen zwischen Rohrleitungselementen bei einem solchen Kraftwerk.

Bei solarthermischen Kraftwerken der genannten Art wird ein Wärmeträgerfluid, beispielsweise Wasser, durch Sonneneinstrahlung stark erhitzt und dann bei hoher Temperatur (bis 210 °C) und hohem Druck (beispielsweise bei 40 bar) durch entsprechende Rohre oder Rohrleitungselemente des Kraftwerks geleitet. Dabei kommt es regelmäßig vor, dass unterschiedliche Rohrleitungselemente, die sich im Wesentlichen gemeinsam in einer ersten Raumrichtung quer zu der ersten Raumrichtung, beispielsweise horizontal, erstrecken und die in einer zweiten Raumrichtung, um ein festes Maß, beispielsweise vertikal, voneinander beabstandet sind, aufgrund thermisch bedingter Ausdehnung ihre relative Lage zueinander verändern. Wenn derartige Rohrleitungselemente trotz der erwähnten thermischen Ausdehnung und relativen Lageänderung fluidtechnisch miteinander verbunden werden sollen, muss zu diesem Zweck eine Leitungsverbindung vorgesehen sein, welche in der Lage ist, die beschriebenen thermisch bedingten Ausdehnungseffekte auszugleichen.

In der Vergangenheit wurden zu diesem Zweck Leitungsverbindungen vorgeschlagen, die im Wesentlichen (oder ausschließlich) aus einem flexiblen, metallischen Schlauchleitungselement, jeweils mit starren, endständigen Anschlussstücken, bestanden. Von diesen vorbekannten Lösungen sei in diesem Zusammenhang exemplarisch die EXTENSIONFLEX®-Verbindung der Senior Flexonics GmbH erwähnt.

Bei einer solchen Lösung ist als nachteilig anzusehen, dass der genannte Schlauch bzw. das Schlauchleitungselement im Wesentlichen nur in seinen Endbereichen bewegt bzw. beansprucht wird, so dass sich keine gute, weil inhomogene, Materialausnutzung ergibt. Beispielsweise werden bei einem Schlauch mit einer Länge von 7 m schätzungsweise nur etwa die endständigen 1,5 bis 2 m des Schlauchs effektiv belastet.

Außerdem spielt das Eigengewicht der beschriebenen Anordnung eine Rolle, so dass nach dem Stand der Technik relativ komplexe Anordnungen zur Gewichtskompensation vorgesehen sind. Des Weiteren bewegt sich der genannte Schlauch aufgrund des hohen anliegenden Drucks in unvorhersehbarer Weise, was sich einerseits negativ auf die Standzeit auswirken kann und andererseits wiederum komplexe und kostenträchtige (Bewegungs-)Kompensationseinrichtungen erforderlich macht.

Der Erfindung liegt davon ausgehend die Aufgabe zugrunde, eine Leitungsverbindung der eingangs definierten Art zur Verwendung insbesondere in solarthermischen Kraftwerken anzugeben, welche die vorstehend aufgeführten Nachteile vermeidet und so bei möglichst kostengünstiger Auslegung zu einer definierten und homogeneren Materialbeanspruchung führt, wodurch sich die Lebensdauer der Anordnung verlängern lässt. Außerdem soll in einfacher Weise eine Gewichtskompensation der Anordnung möglich sein.

Gelöst wird diese Aufgabe durch eine weitere Verbindung mit den Merkmalen des Anspruchs 1, durch eine Leitungsverbindungsanordnung mit den Merkmalen des Anspruchs 12 und durch ein solarthermisches Kraftwerk mit den Merkmalen des Anspruchs 14.

Vorteilhafte Weiterbildungen sind jeweils Gegenstand von Unteransprüchen.

Erfindungsgemäß ist eine Leitungsverbindung für solarthermische Kraftwerke, insbesondere Rinnenkraftwerke, zum Verbinden eines ersten Rohrleitungselements mit einem zweiten Rohrleitungselement, welche Rohrleitungselemente sich im Wesentlichen gemeinsam in einer ersten Raumrichtung erstrecken, welches erste Rohrleitungselement in einer zweiten Raumrichtung, quer zu der ersten Raumrichtung, um ein festes Maß von dem zweiten Rohrleitungselement beabstandet ist, welches zweite Rohrleitungselement in Richtung seiner Längserstreckung beim Betrieb des Rinnenkraftwerks eine relativ starke thermisch bedingte Ausdehnung aufweist, dadurch gekennzeichnet, dass die Leitungsverbindung zumindest folgende Bestandteile umfasst: a) einen ersten flexiblen Schlauchabschnitt; b) einen zweiten flexiblen Schlauchabschnitt; und c) einen starren Rohrabschnitt, welcher starre Rohrabschnitt zwischen dem ersten Schlauchabschnitt und dem zweiten Schlauchabschnitt angeordnet ist, während der erste Schlauchabschnitt einerseits mit dem starren Rohrabschnitt sowie andererseits mit dem ersten Rohrleitungselement zu verbinden oder verbunden ist, und während der zweite Schlauchabschnitt einerseits mit dem starren Rohrabschnitt sowie andererseits mit dem zweiten Rohrleitungselement zu verbinden oder verbunden ist.

Erfindungsgemäß ist eine Leitungsverbindungsanordnung bei einem solarthermischen Kraftwerk, insbesondere Rinnenkraftwerk, die ein erstes Rohrleitungselement mit einem zweiten Rohrleitungselement verbindet, welche Rohrleitungselemente sich im Wesentlichen gemeinsam in einer ersten Raumrichtung erstrecken, welches erste Rohrleitungselement in einer zweiten Raumrichtung, quer zu der ersten Raumrichtung, um ein festes Maß von dem zweiten Rohrleitungselement beabstandet ist, welches zweite Rohrleitungselement in Richtung seiner Längserstreckung beim Betrieb des Rinnenkraftwerks eine relativ starke thermisch bedingte Ausdehnung erfährt, dadurch gekennzeichnet, dass die Leitungsverbindungsanordnung zumindest folgende Bestandteile umfasst: a) das erste Rohrleitungselement; b) das zweite Rohrleitungselement; c) einen ersten flexiblen Schlauchabschnitt; d) einen zweiten flexiblen Schlauchabschnitt; und e) einen starren Rohrabschnitt, welcher starre Rohrabschnitt zwischen dem ersten Schlauchabschnitt und dem zweiten Schlauchabschnitt angeordnet ist, während der erste Schlauchabschnitt einerseits mit dem starren Rohrabschnitt sowie andererseits mit dem ersten Rohrleitungselement verbunden ist, und während der zweite Schlauchabschnitt einerseits mit dem starren Rohrabschnitt sowie andererseits mit dem zweiten Rohrleitungselement verbunden ist.

Erfindungsgemäß ist ein solarthermisches Kraftwerk, insbesondere Rinnenkraftwerk, mit einem ersten Rohrleitungselement und mit einem zweiten Rohrleitungselement zur Leiten eines durch Sonnenenergie erhitzten oder zu erhitzenden Fluids, welche Rohrleitungselemente sich im Wesentlichen gemeinsam in einer ersten Raumrichtung erstrecken, welches erste Rohrleitungselement in einer zweiten Raumrichtung, quer zu der ersten Raumrichtung, um ein festes Maß von dem zweiten Rohrleitungselement beabstandet ist, welches zweite Rohrleitungselement in Richtung seiner Längserstreckung beim Betrieb des Kraftwerks aufgrund des Wärmegehalts des Fluids eine relativ starke thermisch bedingte Ausdehnung erfährt, gekennzeichnet durch eine erfindungsgemäße Leitungsverbindung zum Verbinden des ersten Rohrleitungselements mit dem zweiten Rohrleitungselement oder durch eine erfindungsgemäße Leitungsverbindungsanordnung.

Gemäß der vorliegenden Erfindung erfolgt die Verbindung des ersten Rohrleitungselements und des zweiten Rohrleitungselements nicht durch einen in Gänze flexiblen Metallschlauch, sondern durch eine Leitungsverbindung, die sich aus einem ersten flexiblen Schlauchabschnitt und einem zweiten flexiblen Schlauchabschnitt zusammensetzt, zwischen denen ein starrer Rohrabschnitt angeordnet ist. Die beschriebene Leitungsverbindung weist somit nur in denjenigen Bereichen flexible Schlauchabschnitte auf, in denen tatsächlich eine Verformung bzw. Belastung stattfindet. Auf diese Weise lässt sich eine deutlich gleichmäßigere Belastung der flexiblen Schlauchabschnitte über deren jeweilige Länge erreichen, was zu einer erhöhten Lebensdauer der gesamten Anordnung führt. Außerdem lässt sich insbesondere eine Gewichtskompensation im Bereich des mittleren starren Rohrabschnitts aufgrund vereinfachter Anbindungsmöglichkeiten und der erfindungsgemäß erreichbaren geradlinigen Bewegung des Mittelpunkts des starren Rohrabschnitts deutlich leichter realisieren als bei den in Gänze flexiblen Schlauchleitungsverbindungen nach dem Stand der Technik.

Im Zuge einer ersten Weiterbildung der erfindungsgemäßen Leitungsverbindung kann vorgesehen sein, dass zwischen dem ersten Schlauchabschnitt und dem starren Rohrabschnitt und/oder zwischen dem zweiten Schlauchabschnitt und dem starren Rohrabschnitt jeweils ein starrer, gekrümmter Leitungsabschnitt oder Rohrbogen angeordnet ist. Dieser Rohrbogen bewirkt vorzugsweise eine Abwinkelung des Leitungsverlaufs um mindestens etwa 90° oder mehr. Vorzugsweise kann die genannte Abwinkelung - ohne Beschränkung - etwa zwischen 100° und 110° betragen. Diese Winkel ergeben sich im Wesentlichen aus dem Abstand der zu verbindenden Rohrleitungselemente und der für eine geforderte Lebensdauer benötigten flexiblen Länge der Schlauchabschnitte.

Im Zuge einer besonders bevorzugten Weiterbildung des erfindungsgemäßen

Leitungsverbindung kann in diesem Zusammenhang vorgesehen sein, dass der erste Schlauchabschnitt, der starre Rohrabschnitt und der zweite Schlauchabschnitt relativ zueinander etwa in einer Z-Geometrie angeordnet sind. Vorzugsweise sind dabei die flexiblen Schlauchabschnitte etwa auf den parallelen Seiten eines etwa gleichschenkligen Trapezes angeordnet, und der starre Rohrabschnitt liegt etwa auf einer Diagonalen dieses Trapezes. Dies kann insbesondere durch entsprechende Anordnung und Ausgestaltung der genannten Rohrbögen erreicht werden. Untersuchungen der Anmelderin haben gezeigt, dass bei Realisierung einer derartigen Z-Geometrie sich besonders günstige Krümmungen im Bereich der flexiblen Schlauchabschnitte ergeben, welche bei Belastung insbesondere nahezu ideale Kreisbögen ausbilden. Vorzugsweise sind dabei die Positionen der Mitten der flexiblen Bereiche (Schlauchabschnitte) in Sammelleitungs- (und Ausdehnungs-)Richtung (der "ersten" Raumrichtung) gleich, was gleichbedeutend mit der genannten Z-Anordnung ist.

Im Zuge einer wieder anderen Weiterbildung der erfindungsgemäßen Leitungsverbindung kann vorgesehen sein, dass der erste Schlauchabschnitt und der zweite Schlauchabschnitt in einer Mittellage der Anordnung, in der sich der erste Schlauchabschnitt und der zweite Schlauchabschnitt etwa parallel zueinander und etwa parallel zu den zu verbindenden Rohrleitungselementen erstrecken, zwei einander gegenüberliegende Seiten eines gedachten Rechtecks oder Trapezes bilden. Des Weiteren kann vorgesehen sein, dass die beiden genannten Schlauchabschnitte in etwa gleich lang ausgebildet sind, was der genannten Rechteckkonfiguration entspricht.

Um ein besonders günstiges Krümmungsverhalten im Betrieb zu erreichen, kann weiterhin vorgesehen sein, dass der erste Schlauchabschnitt und der zweite Schlauchabschnitt in der Mittellage jeweils eine geringe laterale Auslenkung bezogen auf die Seiten des gedachten Rechtecks oder Trapezes und in einer Ebene desselben aufweisen. Vorzugsweise sind dabei der erste Schlauchabschnitt und der zweite Schlauchabschnitt jeweils an einem dem starren Rohrabschnitt zugewandten Ende nach außen bezogen auf das genannte Rechteck oder Trapez lateral ausgelenkt.

Die genannte Mittellage entspricht etwa einer Anordnung, wie sie sich ergibt, wenn eine mittlere thermisch bedingte Ausdehnung des zweiten Rohrleitungselements vorliegt,

Die genannte Mittellage befindet sich etwa in der Mitte zwischen zwei Endlagen oder Endstellungen, welche einem maximal ausgedehnten zweiten Rohrleitungselement bzw. einen minimal oder gar nicht ausgedehnten zweiten Rohrleitungselement entsprechen. In diesen Endlagen oder Endstellungen bilden der erste Schlauchabschnitt und der zweite Schlauchabschnitt im Zuge einer besonders vorteilhaften Weiterbildung der erfindungsgemäßen Leitungsverbindung annähernd ideale Kreisbögen aus, um eine möglichst günstige Belastung der genannten Schlauchabschnitte zu erreichen. In der einen Endlage kann sich der starre Rohrabschnitt im Wesentlichen genau in der zweiten Raumrichtung, d. h. quer zur Längserstreckung der Rohrleitungselemente erstrecken. Dies ist jedoch nicht zwingend: Die Dimensionierung und Orientierung des "Z" hängt - wie oben angemerkt - vom Rohrleitungsabstand, der erwarteten Bewegung und der Lebensdaueranforderung ab. Insbesondere durch Verwendung von Rohrbögen mit geändertem Radius lässt sich die Orientierung ändern, ohne die Kinematik der Anordnung wesentlich zu beeinflussen.

Im Zuge einer wieder anderen Weiterbildung der erfindungsgemäßen Leitungsverbindung kann vorgesehen sein, dass eine Längsabmessung des starren Rohrabschnitts größer ist als das feste Maß, d. h. der Abstand zwischen dem ersten Rohrleitungselement und dem zweiten Rohrleitungselement quer zu deren Längserstreckung. Auf diese Weise lässt sich die weiter oben bereits beschriebene Ausgestaltung der Mittellage in besonders einfacher Weise realisieren.

Weiterhin kann vorgesehen sein, dass der Schwerpunkt der Anordnung aus erstem Schlauchabschnitt, starrem Rohrabschnitt, zweitem Schlauchabschnitt und gegebenenfalls den Rohrbögen bzw. der Mittelpunkt des starren Rohrabschnitts bei thermischer Ausdehnung des zweiten Rohrleitungselements im Wesentlichen nur in einer ersten Richtung bzw. nur in der ersten Raumrichtung bewegt ist. Diese erste Raumrichtung fällt im Betrieb bzw. im Montagezustand der Leitungsverbindung vorzugsweise mit der Horizontalen zusammen.

Die vorstehend angesprochene Bewegung der Punkte auf dem starren Rohrabschnitt ergibt sich bei entsprechender Ausgestaltung der Erfindung aus der Anordnung der Schlauchabschnitte und des starren Rohrabschnitts, wenn man eine gleiche Verformungen der Schlauchabschnitte anstrebt. Der Mittelpunkt des starren Rohrabschnitts bewegt sich dann geradlinig in der ersten Raumrichtung, alle anderen Punkte bewegen sich dagegen auf gekrümmten Bahnen.

Des Weiteren kann vorgesehen sein, dass die Anordnung aus erstem Schlauchabschnitt, starrem Rohrabschnitt, zweitem Schlauchabschnitt und gegebenenfalls den Rohrbögen eine Abstützung gegen die Schwerkraft aufweist, welche vorzugsweise etwa in ihrem Schwerpunkt oder im Bereich des Mittelpunkts des starren Rohrabschnittsangeordnet ist. Eine besonders vorteilhafte Ausgestaltung ergibt sich, wenn die genannte Abstützung an dem starren Rohrabschnitt angeordnet ist - insbesondere, weil dort eine Verbindung mit der restlichen Leitungsverbindung besonders einfach zu bewerkstelligen ist.

Vorzugweise erfolgt die Abstützung in dem angesprochenen, geradlinig bewegten Punkt, d.h. dem Mittelpunkt des starren Rohrabschnitts. Dieser wird in der Regel mit dem Schwerpunkt in etwa zusammenfallen, was vorteilhaft ist. Die Positionierung wird aber sinnvoller Weise rein geometrisch vorgenommen; die Massenverteilung spielt nur eine untergeordnete Rolle.

Eine andere Weiterbildung der erfindungsgemäßen Leitungsverbindung sieht vor, dass die Anordnung aus erstem Schlauchabschnitt, starrem Rohrabschnitt, zweitem Schlauchabschnitt und gegebenenfalls den Rohrbögen eine Führung in etwa der ersten Raumrichtung aufweist. Diese Führung kann - ohne Beschränkung - als Gleit- oder Rollführung ausgebildet sein und fällt vorzugsweise mit der weiter oben beschriebenen Abstützung zusammen, d. h. besagte Abstützung ist als Führungseinrichtung ausgebildet oder umgekehrt.

Die weiter oben beschriebene Abstützung kann beispielsweise und ohne Beschränkung in Form einer Schienenführung, in Form eines Watt-Gestänges oder in Form eines Tschebyschow-Parallelogramms realisiert sein.

Um Wärmeverluste und/oder Beschädigungen der erfindungsgemäßen Leitungsverbindung zu vermeiden, kann sich eine andere Weiterbildung derselben dadurch auszeichnen, dass die Anordnung aus erstem Schlauch, starrem Rohrabschnitt, zweitem Schlauchabschnitt und gegebenenfalls den Rohrbögen zumindest im Bereich des starren Rohrabschnitts und/oder der Rohrbögen eine thermische Isolierung aufweist. Diese ist in den genannten Bereichen deutlich leichter anzuordnen bzw. zu befestigen als im Bereich der flexiblen Schlauchabschnitte bzw. als beim Stand der Technik. Jedoch kann natürlich auch oder sogar ausschließlich im Bereich der Schlauchabschnitte eine Isolierung oder Umhüllung vorgesehen sein.

Eine Weiterbildung der erfindungsgemäßen Leitungsverbindungsanordnung zeichnet sich dadurch aus, dass sie eine Leitungsverbindung umfasst, die wie vorstehend definiert ausgebildet sein kann.

Die beschriebene Leitungsverbindung eignet sich ganz grundsätzlich zum Ausgleich von variablen Abständen zwischen Rohrleitungselementen bei einem solarthermischen Kraftwerk, insbesondere einem solarthermischen Rinnenkraftwerk.

Weitere Eigenschaften der Erfindung ergeben sich aus der folgenden Figurenbeschreibung anhand der Zeichnung.
- Figur 1: zeigt schematisch ein solarthermisches Kraftwerk mit einer erfindungsgemäßen Leitungsverbindungsanordnung, die eine erfindungsgemäße Leitungsverbindung umfasst, in drei verschiedenen Betriebsstellungen;
- Figur 2: zeigt die Leitungsverbindung aus Figur 1 in ihrer so genannten Mittellage;
- Figur 3: zeigt die Leitungsverbindung aus Figur 1 in einer ersten Endstellung; und
- Figur 4: zeigt die Leitungsverbindung aus Figur 1 in einer zweiten Endstellung.

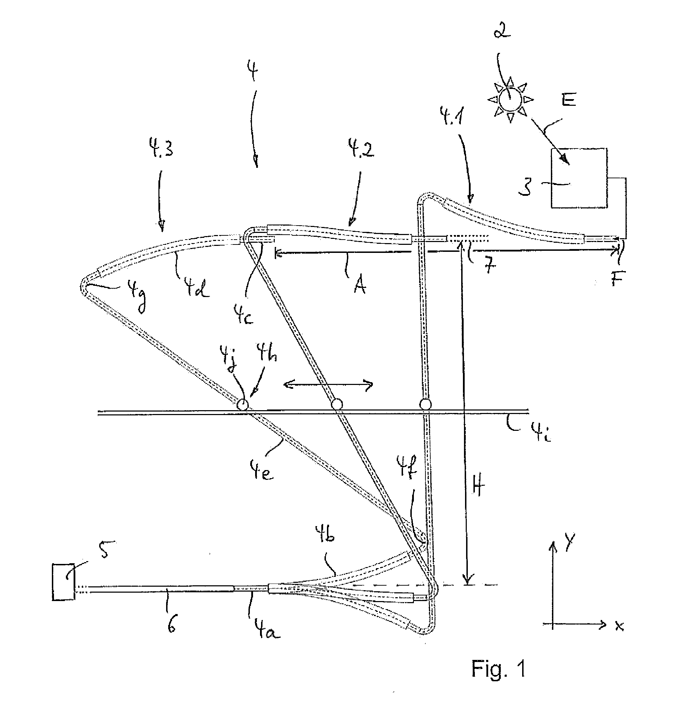

Figur 1 zeigt rein schematisch ein solarthermisches Kraftwerk, beispielsweise - jedoch ohne Beschränkung - ein solarthermisches Rinnenkraftwerk, welches Kraftwerk in seiner Gesamtheit mit dem Bezugszeichen 1 bezeichnet ist. Bei einem solchen Kraftwerk 1 wird in an sich bekannter Weise durch Energieeinstrahlung E der Sonne 2 mittels einer geeigneten Einrichtung 3, beispielsweise ein Absorberrohr oder ein Receiverrohr, ein Fluid, beispielsweise Wasser, erhitzt. Das erhitzte Fluid wird anschließend gemäß dem Pfeil F über eine weiter unten noch näher zu beschreibende Leitungsverbindungsanordnung 4 weiteren Einrichtungen des Kraftwerks 1 zugeführt, die in Figur 1 bei Bezugszeichen 5 ebenfalls nur rein schematisch dargestellt sind, um insbesondere elektrischen Strom zu erzeugen.

Die bereits angesprochene Leitungsverbindungsanordnung 4 umfasst ein erstes Rohrleitungselement 6. Außerdem fasst die Leitungsverbindungsanordnung 4 ein zweites Rohrleitungselement (Sammelleitung), welches mit dem Bezugszeichen 7 bezeichnet und welches in Figur 1 nur in der mittleren 4.2 von insgesamt drei gezeigten Betriebsstellungen 4.1 bis 4.3 der Leitungsverbindungsanordnung 4 explizit zeichnerisch dargestellt ist. Das zweite Rohrleitungselement 7 steht primär mit der genannten Einrichtung 3 in fluidtechnischer Wirkverbindung bzw. ist Teil derselben und dient zum Absorbieren von Strahlungsenergie der Sonne, um das Fluid zu erwärmen, während das erste Rohrleitungselement 6 primär mit der genannten weiteren Einrichtung 5 in fluidtechnischer Wirkverbindung steht.

Das erste Rohrleitungselement 6 (Sammelleitung) ist im Wesentlichen ortsfest angeordnet, während das zweite Rohrleitungselement 7 (Absorber- oder Receiverrohr) aufgrund der thermischen Beaufschlagung durch die Sonne 2 zur Erwärmung des Fluids F eine relativ starke thermisch bedingte Ausdehnung in Richtung seiner Längserstreckung erfährt. Dies ist in Figur 1 nicht explizit dargestellt; jedoch befindet sich das bei Bezugszeichen 7 gezeigte Anschlussende des zweiten Rohrleitungselements 7 gemäß der Darstellung in Figur 1 je nach Stellung 4.1 bis 4.3 der Leitungsverbindungsanordnung 4 entweder weiter rechts oder weiter links, wie der Fachmann der Figur 1 ohne weiteres entnimmt.

Des Weiteren sind in Figur 1 noch zwei Raumrichtungen, nämlich die x-Richtung und die y-Richtung, zeichnerisch dargestellt. Die x-Richtung (erste Raumrichtung) fällt im Wesentlichen mit der Längserstreckung des ersten Rohrleitungselements 6 und des zweiten Rohrleitungselements 7 zusammen. In der zweiten Raumrichtung (y-Richtung), die sich quer zu der zweiten Raumrichtung erstreckt und regelmäßig mit der Richtung der Schwerkraft zusammenfällt, sind das erste Rohrleitungselement 6 und das zweite Rohrleitungselement 7 um ein festes Maß H voneinander beabstandet. Diesen Abstand H und die Längsverschiebung des zweiten Rohrleitungselements 7 aufgrund der beschriebenen thermischen Ausdehnung gilt es mittels der Leitungsverbindungsanordnung 4 auszugleichen.

Die gesamte bzw. die maximale thermisch bedingte Ausdehnung des zweiten Rohrleitungselements 7 in x-Richtung ist in Figur 1 zwischen der ersten (End-)Stellung 4.1 und der zweiten (End-)Stellung 4.3 mit dem Bezugszeichen A bezeichnet.

Zu diesem Zweck umfasst eine in der genannten Leitungsverbindungsanordnung 4 enthaltene Leitungsverbindung folgende Bestandteile, die aus Gründen der Übersichtlichkeit in Figur 1 nur in der (End-)Stellung 4.3 explizit bezeichnet sind:

Einen ersten flexiblen Schlauchabschnitt 4a, der zumindest abschnittweise einen gewellten Bereich 4b aufweist; einen zweiten flexiblen Schlauchabschnitt 4c, der ebenfalls zumindest abschnittsweise einen gewellten Bereich 4d aufweist; und einem starren Rohrabschnitt 4e, der zwischen dem ersten Schlauchabschnitt 4a und dem zweiten Schlauchabschnitt 4c angeordnet und mit diesen über endständige Rohrbögen 4f, 4g leitungstechnisch verbunden ist. Die genannten Rohrbögen 4f, 4g erstrecken sich im gezeigten Ausführungsbeispiel - ohne Beschränkung - über einen Winkelbereich von mehr als 90°. Auf diese Weise ergibt sich für die beschriebene Leitungsverbindung aus erstem Schlauchabschnitt 4a, zweitem Schlauchabschnitt 4c und starrem Rohrabschnitt 4e insgesamt eine etwa Z-förmige Geometrie.

In der bei Bezugszeichen 4.2 dargestellten Mittellage der Anordnung, welche etwa einer mittleren thermischen Ausnehmung des zweiten Rohrleitungselements 7 zwischen den beiden Extremstellungen 4.1, 4.3 (Vollausdehnung bzw. keine Ausdehnung) entspricht, sind der erste Schlauchabschnitt 4a und der zweite Schlauchabschnitt 4c in etwa parallel zueinander und zu den zu verbindenden Rohrleitungselementen 6, 7 angeordnet und bilden zwei einander gegenüberliegende Seiten eines gedachten Rechtecks bzw. Trapezes.

Gemäß der Ausgestaltung in Figur 1 sind der erste Schlauchabschnitt 4a und der zweite Schlauchabschnitt 4c etwa gleich lang ausgebildet, so dass sich eine (gedachte) Rechteckkonfiguration ergibt.

Die Gesamtanordnung ist derart ausgebildet, dass auch in der Mittellage 4.2 der erste Schlauchabschnitt 4a und der zweite Schlauchabschnitt 4c eine geringe Krümmung aufweisen, weiche Krümmung sich zu den beiden Endstellungen 4.1, 4.3 hin jeweils verstärkt. Zumindest in den Endstellungen 4.1 und 4.3 entspricht die Krümmung der Schlauchabschnitte 4a, 4c dabei im Wesentlichen genau der Krümmung eines idealen Kreisbogens, so dass sich eine möglichst gleichmäßige mechanische Belastung der Schlauchabschnitte 4a, 4c ergibt, was die Lebensdauer der Gesamtanordnung positiv beeinflusst.

Die weiter oben beschriebene geringe Krümmung der Schlauchabschnitte 4a, 4c auch in der Mittellage 4.2 ist gleichbedeutend damit, dass der erste Schlauchabschnitt 4a und der zweite Schlauchabschnitt 4c in der Mittellage 4.2 eine geringe laterale Auslenkung bezogen auf die Seiten des angesprochenen, gedachten Rechtecks aufweisen, welche Auslenkung in einer Ebene des gedachten Rechtecks erfolgt, und zwar gemäß Figur 1 jeweils nach außen bezogen auf das gedachte Rechteck.

Insbesondere in der Darstellung der ersten Endstellung 4.1 lässt sich entnehmen, dass eine Längsabmessung des starren Rohrabschnitts 4e größer ist als das feste Maß H, d. h. der Abstand zwischen erstem Rohrleitungselement 6 und zweitem Rohrleitungselement 7 in y-Richtung.

Gemäß der Darstellung in Figur 1 bewegt sich der Mittelpunkt (M) des starren Rohrabschnitts (4e), der etwa mit dem Schwerpunkt der Anordnung aus erstem Schlauchabschnitt 4a, starrem Rohrabschnitt 4e und zweitem Schlauchabschnitt 4c sowie der Rohrbögen 4f, 4g nebst ggf. noch vorhandener Isolierung (nicht gezeigt) zusammenfallen kann, bei thermischer Ausdehnung des zweiten Rohrleitungselements 7 im Wesentlichen nur in der ersten Raumrichtung (x-Richtung) entlang der Horizontalen, die in Figur 1 mittels einer strichpunktierten Linie symbolisiert ist. Es ist möglich, die Anordnung aus erstem Schlauchabschnitt 4a, starrem Rohrabschnitt 4e, zweitem Schlauchabschnitt 4c und den Rohrbögen 4f, 4g nebst ggf. noch vorhandener Isolierung gegen die Schwerkraft (in -y-Richtung) abzustützen, was im Bereich des starren Rohrabschnitts 4e geschieht. Zu diesem Zweck weist die Leitungsverbindungsanordnung 4 bei Bezugszeichen 4h eine geradlinige Führung auf, die beispielsweise - ohne Beschränkung - aus einer horizontal angeordneten Führungsschiene 4i und einer an dem starren Rohrabschnitt 4e angeordneten Rolleneinheit 4j gebildet sein kann.

Wie bereits erwähnt, kann die Anordnung aus erstem Schlauchabschnitt 4a, starrem Rohrabschnitt 4e, zweitem Schlauchabschnitt 4c sowie den Rohrbögen 4f, 4g im Bereich des starren Rohrabschnitts 4e, im Bereich der Schlauchabschnitte 4a, 4c und/oder im Bereich der Rohrbögen 4f, 4g eine thermische Isolierung oder sonstige Umhüllung aufweisen.

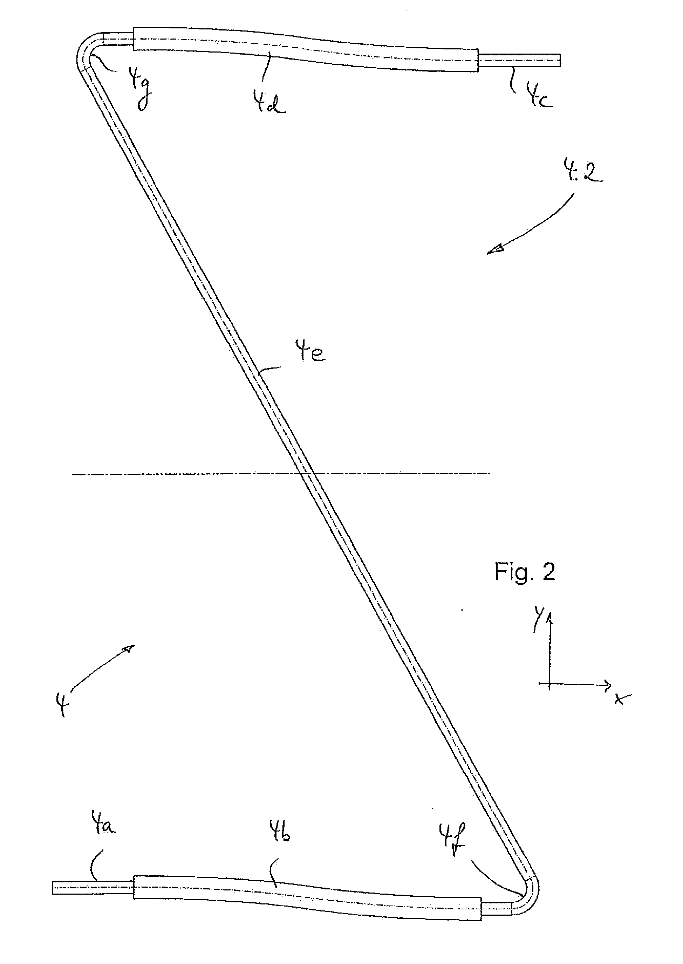

Figuren 2 bis 4 zeigen die Leitungsverbindung 4 gemäß Figur 1 nochmals getrennt nach den bereits angesprochenen Stellungen 4.1 bis 4.3. Gleiche Bezugszeichen in den Figuren bezeichnen jeweils gleiche oder zumindest gleich wirkende Elemente.

In Figur 2 ist ausschließlich die bereits angesprochene Mittellage 4.2 der Leitungsverbindungsanordnung 4 dargestellt. Hier erkennt man besonders gut die bereits angesprochene (umgedrehte) Z-Geometrie der Anordnung. Die Schlauchabschnitte 4a, 4c bilden in etwa die einander gegenüberliegenden, kurzen Seiten eines gedachten Rechtecks bzw. Trapezes und weisen jeweils nur eine geringe laterale Auslenkung (in y-Richtung) auf, und zwar nach außen an einem jeweils dem starren Rohrabschnitt 4e zugewandten Ende.

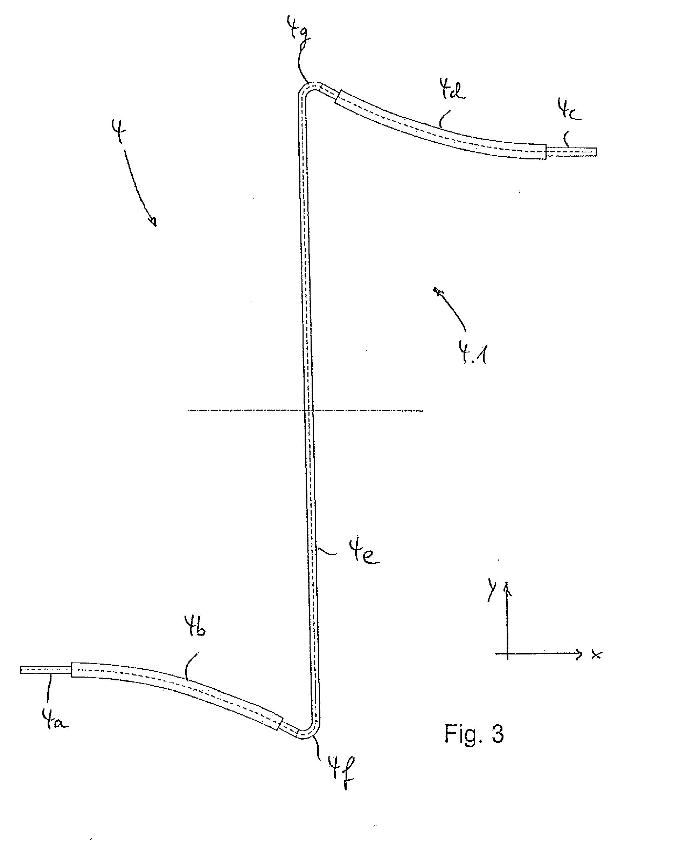

In Figur 3 ist die bereits angesprochene erste Endstellung der Leitungsverbindungsanordnung 4 (Bezugszeichen 4.1 in Figur 1) genauer dargestellt. Hier erstreckt sich der starre Rohrabschnitt 4e im Wesentlichen genau vertikal (in y-Richtung). Die Schlauchabschnitte 4a, 4c sind stärker gekrümmt als in der Mittellage 4.2 (Figur 2) und bilden dabei angenähert ideale Kreisbögen.

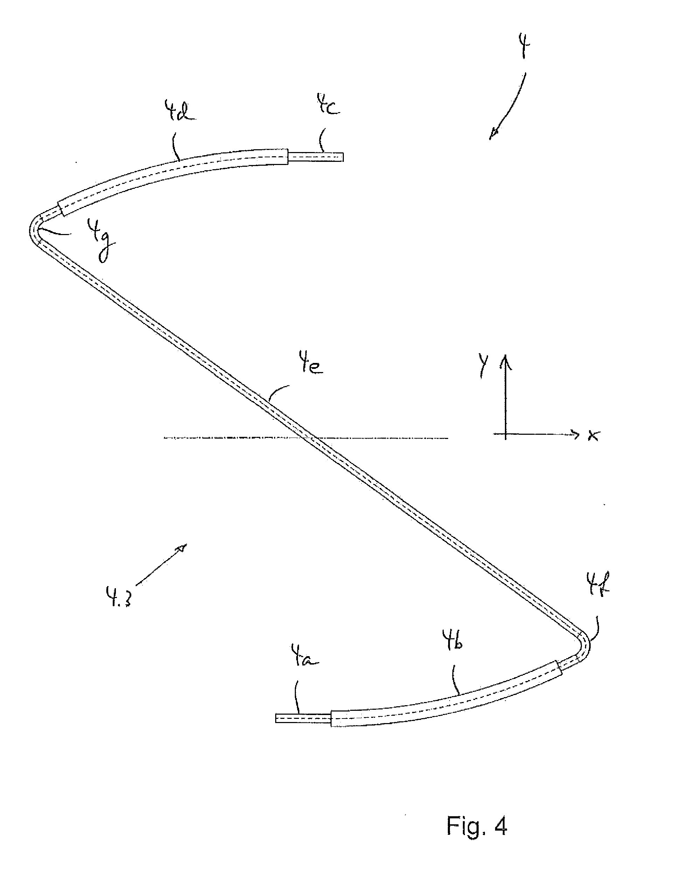

Figur 4 zeigt abschließend die Leitungsverbindungsanordnung 4 in ihrer zweiten Endstellung 4.3 gemäß Figur 1. Die Schlauchabschnitte 4a, 4c sind hierbei anders herum gekrümmt als in der ersten Endstellung 4.1 (Figur 3) und bilden wiederum angenähert ideale Kreisbögen.

Auf diese Weise kommen bei der gezeigten Leitungsverbindungsanordnung 4 nur in solchen Bereichen flexible Schlauchabschnitte 4a, 4c zum Einsatz, in denen tatsächlich eine Verformung stattfindet, während der auch nach dem Stand der Technik im Wesentlichen unverformte Mittelabschnitt durch den gezeigten starren Rohrabschnitt 4e gebildet ist. Dadurch ergibt sich eine gleichmäßigere Belastung der Schlauchabschnitte, was die Lebensdauer erhöht. Außerdem lässt sich die angesprochene Abstützung im Bereich der starren Rohrabschnitts 4e relativ leicht realisieren.

Die beschriebene Leitungsverbindungsanordnung 4 eignet sich vor allem für die Verwendung bei thermischen Solarkraftwerken, insbesondere Rinnenkraftwerken, ist jedoch grundsätzlich nicht auf eine derartige Verwendung beschränkt.

## Patentansprüche

1. Leitungsverbindung für solarthermische Kraftwerke (1), insbesondere Rinnenkraftwerke, zum Verbinden eines ersten Rohrleitungselements (6) mit einem zweiten Rohrleitungselement (7), welche Rohrleitungselemente (6, 7) sich im Wesentlichen gemeinsam in einer ersten Raumrichtung (x) erstrecken, welches erste Rohrleitungselement (6) in einer zweiten Raumrichtung (y), quer zu der ersten Raumrichtung (x), um ein festes Maß (H) von dem zweiten Rohrleitungselement (7) beabstandet ist, welches zweite Rohrleitungselement (7) in Richtung seiner Längserstreckung beim Betrieb des Kraftwerks (1) eine relativ starke thermisch bedingte Ausdehnung (A) aufweist,
**dadurch gekennzeichnet, dass**
die Leitungsverbindung zumindest folgende Bestandteile umfasst:
a) einen ersten flexiblen Schlauchabschnitt (4a);
b) einen zweiten flexiblen Schlauchabschnitt (4c); und
c) einen starren Rohrabschnitt (4e);
welcher starre Rohrabschnitt (4e) zwischen dem ersten Schlauchabschnitt (4a) und dem zweiten Schlauchabschnitt (4c) angeordnet ist, während der erste Schlauchabschnitt (4a) einerseits mit dem starren Rohrabschnitt (4e) sowie andererseits mit dem ersten Rohrleitungselement (6) zu verbinden oder verbunden ist, und während der zweite Schlauchabschnitt (4c) einerseits mit dem starren Rohrabschnitt (4e) sowie andererseits mit dem zweiten Rohrleitungselement (7) zu verbinden oder verbunden ist.

2. Leitungsverbindung nach Anspruch 1,
**dadurch gekennzeichnet, dass**
zwischen dem ersten Schlauchabschnitt (4a) und dem starren Rohrabschnitt (4e) und/oder zwischen dem zweiten Schlauchabschnitt (4c) und dem starren Rohrabschnitt (4e) jeweils ein starrer Rohrbogen (4f, 4g) angeordnet ist.

3. Leitungsverbindung nach Anspruch 1 oder 2,
**dadurch gekennzeichnet, dass**
der erste Schlauchabschnitt (4a), der starre Rohrabschnitt (4e) und der zweite Schlauchabschnitt (4c) relativ zueinander etwa in einer Z-Geometrie angeordnet sind.

4. Leitungsverbindung nach einem der Ansprüche 1 bis 3,
**dadurch gekennzeichnet, dass**
der erste Schlauchabschnitt (4a) und der zweite Schlauchabschnitt (4c) in einer Mittellage (4.2) der Anordnung, in der sich der erste Schlauchabschnitt (4a) und der zweite Schlauchabschnitt (4c) in etwa parallel zueinander und zu den zu verbindenden Rohrleitungselementen (6, 7) erstrecken, zwei einander gegenüberliegende Seiten eines gedachten Rechtecks oder Trapezes bilden und vorzugsweise gleich lang ausgebildet sind.

5. Leitungsverbindung nach Anspruch 4,
**dadurch gekennzeichnet, dass**
der erste Schlauchabschnitt (4a) und der zweite Schlauchabschnitt (4c) in der Mittellage (4.2) eine geringe laterale Auslenkung bezogen auf die Seiten des gedachten Rechtecks oder Trapezes und in einer Ebene desselben aufweisen, vorzugsweise jeweils nach außen bezogen auf das gedachte Rechteck oder Trapez an einem jeweils dem starren Rohrabschnitt (4e) zugewandten Ende.

6. Leitungsverbindung nach einem der Ansprüche 1 bis 5,
**dadurch gekennzeichnet, dass**
der erste Schlauchabschnitt (4a) und der zweite Schlauchabschnitt (4c) in Endlagen (4.1, 4.3), welche einem maximal ausgedehnten zweiten Rohrleitungselement (7) bzw. einem minimal ausgedehnten zweiten Rohrleitungselement (7) entsprechen, angenähert ideale Kreisbögen ausbilden.

7. Leitungsverbindung nach einem der Ansprüche 1 bis 6,
**dadurch gekennzeichnet, dass**
eine Längsabmessung des starren Rohrabschnitts (4e) größer ist als das feste Maß (H) zwischen dem ersten Rohrleitungselement (6) und dem zweiten Rohrleitungselement (7).

8. Leitungsverbindung nach einem der Ansprüche 1 bis 7,
**dadurch gekennzeichnet, dass**
der Schwerpunkt der Anordnung aus erstem Schlauchabschnitt (4a), starrem Rohrabschnitt (4e), zweitem Schlauchabschnitt (4c) und ggf. den Rohrbögen (4f, 4g) gemäß Anspruch 2 oder der Mittelpunkt des starren Rohrabschnitts (4e) bei thermischer Ausdehnung des zweiten Rohrleitungselements (7) im Wesentfichen nur in der ersten Raumrichtung (x) bewegt ist, vorzugsweise horizontal.

9. Leitungsverbindung nach einem der Ansprüche 1 bis 8,
**dadurch gekennzeichnet, dass**
die Anordnung aus erstem Schlauchabschnitt (4a), starrem Rohrabschnitt (4e), zweitem Schlauchabschnitt (4c) und ggf. den Rohrbögen (4f, 4g) gemäß Anspruch 2 eine Abstützung gegen die Schwerkraft aufweist, vorzugsweise etwa in ihrem Schwerpunkt oder im Bereich des Mittelpunkts des starren Rohrabschnitts (4e).

10. Leitungsverbindung nach einem der Ansprüche 1 bis 9,
**dadurch gekennzeichnet, dass**
die Anordnung aus erstem Schlauchabschnitt (4a), starrem Rohrabschnitt (4e), zweitem Schlauchabschnitt (4c) und ggf. den Rohrbögen (4f, 4g) gemäß Anspruch 2 eine Führung (4i, 4j) etwa in der ersten Raumrichtung (x) aufweist, vorzugsweise eine Gleit- oder Rollführung, vorzugsweise geradlinig, vorzugsweise im Bereich der Abstützung gemäß Anspruch 9.

11. Leitungsverbindung nach einem der Ansprüche 1 bis 10,
**dadurch gekennzeichnet, dass**
die Anordnung aus erstem Schlauchabschnitt (4a), starrem Rohrabschnitt (4e), zweitem Schlauchabschnitt (4c) und ggf. den Rohrbögen (4f, 4g) gemäß Anspruch 2 im Bereich des starren Rohrabschnitts (4e) und/oder der Rohrbögen (4f, 4g) und/oder der Schlauchabschnitte (4a, 4c) eine thermische Isolierung aufweist.

12. Leitungsverbindungsanordnung (4) bei einem solarthermischen Kraftwerk (1), insbesondere Rinnenkraftwerk, die ein erstes Rohrleitungselement (6) mit einem zweiten Rohrleitungselement (7) verbindet, welche Rohrleitungselemente (6, 7) sich im Wesentlichen gemeinsam in einer ersten Raumrichtung (x) erstrecken, welches erste Rohrleitungselement (6) in einer zweiten Raumrichtung (y), quer zu der ersten Raumrichtung (x), um ein festes Maß (H) von dem zweiten Rohrleitungselement (7) beabstandet ist, weiches zweite Rohrleitungselement (7) in Richtung seiner Längserstreckung beim Betrieb des Kraftwerks (1) eine relativ starke thermisch bedingte Ausdehnung (A) erfährt,
**dadurch gekennzeichnet, dass**
die Leitungsverbindungsanordnung (4) zumindest folgende Bestandteile umfasst:
a) das erste Rohrleitungselement (4a);
b) das zweite Rohrleitungselement (7);
c) einen ersten flexiblen Schlauchabschnitt (4a);
d) einen zweiten flexiblen Schlauchabschnitt (4c); und
e) einen starren Rohrabschnitt (4e);
welcher starre Rohrabschnitt (4e) zwischen dem ersten Schlauchabschnitt (4a) und dem zweiten Schlauchabschnitt (4c) angeordnet ist, während der erste Schlauchabschnitt (4a) einerseits mit dem starren Rohrabschnitt (4e) sowie andererseits mit dem ersten Rohrleitungselement (6) verbunden ist, und während der zweite Schlauchabschnitt (4c) einerseits mit dem starren Rohrabschnitt (4e) sowie andererseits mit dem zweiten Rohrleitungselement (7) verbunden ist.

13. Leitungsverbindungsanordnung (4) nach Anspruch 12,
**gekennzeichnet durch** die weiteren Merkmale betreffend die Leitungsverbindung aus erstem Schlauchabschnitt (4a), zweitem Schlauchabschnitt (4c) und starren Rohrabschnitt (4e) nach einem der Ansprüche 1 bis 11.

14. Solarthermisches Kraftwerk (1), insbesondere Rinnenkraftwerk, mit einem ersten Rohrleitungselement (6), insbesondere nach Art einer Sammelleitung, und mit einem zweiten Rohrleitungselement (7), insbesondere nach Art eines Absorberrohrs oder eines Receiverrohrs, zum Leiten eines durch Sonnenenergie erhitzten oder zu erhitzenden Fluids, welche Rohrleitungselemente (6, 7) sich im Wesentlichen gemeinsam in einer ersten Raumrichtung (x) erstrecken, welches erste Rohrleitungselement (6) in einer zweiten Raumrichtung (y), quer zu der ersten Raumrichtung (x), um ein festes Maß (H) von dem zweiten Rohrleitungselement (7) beabstandet ist, welches zweite Rohrleitungselement (7) in Richtung seiner Längserstreckung beim Betrieb des Kraftwerks (1) aufgrund der Sonneneinstrahlung und/oder der Temperatur des Fluids eine relativ starke thermisch bedingte Ausdehnung (A) erfährt,
**gekennzeichnet durch**
eine Leitungsverbindung zum Verbinden des ersten Rohrleitungselements (6) mit dem zweiten Rohrleitungselement (7) nach einem der Ansprüche 1 bis 11 oder **durch** eine Leitungsverbindungsanordnung (4) nach Anspruch 12 oder 13.

15. Verwendung einer Leitungsverbindung nach einem der Ansprüche 1 bis 11 zum Ausgleichen von variablen Abständen zwischen Rohrleitungselementen (6, 7) bei einem solarthermischen Kraftwerk (1), insbesondere Rinnenkraftwerk.
